# FASCICULE DE BREVET EUROPEEN

(11) **EP 0 771 344 B1**
(45) Date de publication et mention de la délivrance du brevet: **01.04.1998**
(21) Numéro de dépôt: 95943510.8
(22) Date de dépôt: 19.07.1995
(51) Int. Cl.: C10G 11/18, B01J 8/44

(54) **GRILLE DE SOUFFLAGE DE REGENERATEUR D'UNITE DE CRAQUAGE CATALYTIQUE CONTENANT DES PIECES MODULAIRES CERAMIQUES**
BLASGITTER MIT KERAMISCHEN TEILEN FÜR REGENERATOR EINER KATALYTISCHEN KRACKANLAGE
CATALYTIC CRACKER REGENERATOR BLOWING GRATE CONTAINING MODULAR CERAMIC PARTS

(30) Priorité: 21.07.1994 FR 9409020
(43) Date de publication de la demande: 07.05.1997
(73) Titulaire: SOCIETE EUROPEENNE DES PRODUITS REFRACTAIRES, F-92400 Courbevoie (FR)
(72) Inventeur: WERHAHN, Klaus, F-84800 Isle-sur-Sorgues (FR); RICHAUD, Louis, F-84510 Caumont (FR); RECH, Jean, F-30133 Les Angles (FR)
(74) Mandataire: Colas, Jean-Pierre
(86) Numéro de dépôt international: FR9500968
(87) Numéro de publication internationale: WO9603478

(56) Documents cités:
- BE-A- 635 786
- DE-A- 3 407 441
- DE-A- 4 004 886
- GB-A- 1 069 729

## Description

L'invention concerne une pièce protectrice modulaire en céramique et une grille de soufflage de régénérateur d'unité de craquage catalytique munie d'un revêtement protecteur formé de telles pièces.

Le craquage catalytique des hydrocarbures est un procédé largement utilisé pour la production des carburants, notamment pour automobiles, qui se déroule en phase vapeur à une température comprise entre 500 et 700°C.

L'appareillage comporte trois éléments principaux qui sont le réacteur, le régénérateur et le séparateur.

Le catalyseur circule entre réacteur et régénérateur à l'intérieur de tubes de transfert. L'un d'entre eux conduit le catalyseur vers le régénérateur tandis que l'autre est emprunté par l'agent activant régénéré qui retourne au réacteur.

Ce catalyseur est un corps pulvérulent solide, en général un aluminosilicate du type zéolite d'une granulométrie comprise entre 20 et 150 µm à grande surface spécifique.

La partie critique de cet équipement est le régénérateur dont la base comporte une partie métallique perforée appelée grille de soufflage ou d'injection. Celle-ci est soit plate, soit courbée, ce qui est le cas le plus général.

C'est par cette grille que l'on introduit un mélange hydrocarbure-catalyseur-air dans le régénérateur. Les perforations de cette grille sont munies de busettes en acier inoxydable appelées injecteurs. Au niveau de ces injecteurs jouant le rôle de venturis, se produit vers l'intérieur de la chambre de régénération une vaporisation rapide du mélange qui lui confère une vitesse de l'ordre de 100 m/s. Le catalyseur ainsi entraîné à grande vitesse est particulièrement abrasif. L'usure porte sur la zone d'injection et sur le dessus de la grille.

Lors de l'entrée du mélange dans le régénérateur proprement dit, d'un diamètre de 3,5 m à 11 m selon la capacité de traitement, il se produit une diminution brutale de la vitesse d'écoulement du flux gazeux par suite de la modification des sections de passage, ce qui provoque la séparation du mélange réactionnel en 2 phases. Le catalyseur demeure pour l'essentiel dans la partie inférieure du régénérateur où il constitue une couche animée de très forts mouvements turbulents particulièrement dommageables pour le revêtement, mais dont la surface reste en régime stationnaire, à niveau constant tout comme un liquide.

En raison de cette abrasivité et de la température qui règne dans le régénérateur, le dessus de la grille d'injection doit être muni d'un revêtement réfractaire résistant à l'abrasion, qui doit également résister aux très fortes vibrations provoquées par les turbulences, sous peine d'être rapidement détérioré.

FR-A-2 569 828 ou US-A-4 651 447 décrivent un garnissage réfractaire résistant à l'usure formé en ancrant une couche de matériau réfractaire, tel qu'un béton, au moyen d'éléments métalliques spéciaux soudés sur une enveloppe à protéger.

Cette solution exige des temps de montage et de réparation très longs et, de plus, il persiste une forte érosion-corrosion au niveau des passages. Cette solution améliore la durée de vie de la grille, mais pas la vie des busettes logées dans les passages. A chaque arrêt il faut remplacer béton et busettes.

Pour améliorer ceci, on peut substituer des busettes en céramique électrofondue à la place des busettes en acier inoxydable.

La solution actuelle la plus performante à ce jour consiste donc à utiliser conjointement un garnissage du type susdécrit et pièces céramiques tubulaires formant busettes, obtenues par fusion, coulée et moulage d'un mélange constitué essentiellement d'alumine, de zircone et de silice. Les busettes sont logées dans chacun des trous de la grille formant les passages d'injection et maintenues en place par un collier métallique qui permet aussi de compenser la dilatation différentielle entre la grille en acier et chaque busette en céramique.

La réalisation d'un tel ensemble s'effectue en trois étapes :
- mise en place dans les passages de la grille des busettes en céramique avec leur collier métallique puis soudure de ce dernier sur la grille,
- mise en place des éléments métalliques d'ancrage du béton réfractaire hors des zones des passages et soudure de ceux-ci sur la grille, et
- coulée du béton réfractaire.

En cas de nécessité de réparation partielle, il est difficile de ne réparer qu'une zone bien localisée et le temps de réparation est long, ce qui immobilise l'unité de craquage.

Le point faible de cette solution actuelle reste donc le béton qu'il faut remplacer totalement ou partiellement à chaque arrêt pour essayer d'obtenir des campagnes de l'ordre de 6 ans ; alors qu'au bout de 9 ans de fonctionnement seulement environ 10% de la totalité des busettes céramiques seraient à remplacer.

Il existe donc un besoin pour une protection plus efficace et plus facile à réaliser que celles actuellement connues.

L'invention vise à satisfaire ce besoin en fournissant une nouvelle solution pour la protection de la grille de soufflage et des passages d'injection, qui est d'une plus grande longévité, d'une mise en oeuvre simplifiée par rapport aux techniques antérieures, et autorise des réparations partielles localisées rapides.

Plus particulièrement, l'invention concerne une pièce protectrice modulaire en céramique pour grille métallique de soufflage de régénérateur d'unité de craquage catalytique, caractérisée en ce qu'elle comporte une portion tubulaire formant busette et une portion formant dalle s'étendant sensiblement perpendiculairement à la portion tubulaire à partir d'une extrémité de celle-ci.

La forme de la dalle peut être très diverse, par exemple polygonale, telle qu'hexagonale, en forme de secteur de couronne, etc...

La dalle peut être plane ou légèrement courbe pour épouser la courbure de la grille à protéger. A titre purement indicatif, son épaisseur sera de l'ordre de 20 à 35 mm, tandis que sa longueur moyenne sera de l'ordre de 120-180 mm.

La partie tubulaire formant busette est destinée à être positionnée dans une des perforations de la grille de soufflage et peut avoir une longueur égale ou légèrement supérieure à l'épaisseur (laquelle est de 20 à 40 mm habituellement) de la grille. On préfère habituellement que cette longueur excède l'épaisseur de la grille d'environ 5 à 100 mm, en particulier d'environ 10 mm, car on a observé qu'on obtenait ainsi une meilleure protection des passages d'injection. Les diamètres intérieur et extérieur de la partie tubulaire seront habituellement de 20-70 mm et de 40-130 mm, respectivement.

De préférence, la pièce protectrice de l'invention comporte, en outre, un moyen de fixation à la grille de soufflage. Selon un mode de réalisation particulièrement préféré, le moyen de fixation consiste en au moins un élément métallique partiellement noyé (appelé ci-après "insert") dans la matière céramique constituant la pièce de l'invention, cet insert métallique pouvant être soudé, par exemple à la grille.

Le ou les inserts de fixation peuvent être disposés, par exemple, soit sous la dalle et en périphérie de celle-ci pour permettre une fixation par soudure latérale, soit dans la partie tubulaire et de façon à dépasser en dessous de la grille métallique, ce qui permet sa fixation rapide et facile par soudure.

La pièce modulaire de l'invention peut être fabriquée directement par coulage-moulage ; pressage ; ou fusion, coulée et moulage selon les techniques habituelles de fabrication des pièces de forme en matériaux réfractaires.

Elle est de préférence monolithique, c'est-à-dire qu'elle est constituée d'un seul tenant et d'un seul type de matériau.

La pièce modulaire sera habituellement formée, au moins majoritairement d'oxydes réfractaires tels que l'alumine, la zircone ou une combinaison d'alumine-zircone-silice (matériaux AZS). Par majoritairement on entend des produits dont la teneur en oxydes est supérieure à 50%.

Des carbures, nitrures ou borures peuvent aussi être incorporés dans les oxydes de base pour les renforcer.

Parmi les matériaux AZS adaptés à la réalisation de ces pièces, on peut notamment citer ceux qui consistent essentiellement, en % en poids, en :
Al₂O₃ = 45-51%, ZrO₂ = 32-41%, SiO₂ = 12-16%, Na₂O et/ou K₂O = 1-1,2% et l'ensemble MgO+CaO+Fe₂O₃+TiO₂ ≤ 0,3%.

Un matériau réfractaire préféré pour la réalisation des pièces de l'invention comprend, en pourcentages pondéraux, 50% de Al₂O₃, 32,5% de ZrO₂, 16% de SiO₂, 1,1% de Na₂O et/ou K₂O et ≤ 0,4% de MgO, CaO, Fe₂O₃ et TiO₂ au total.

Pourraient être également utilisés les matériaux décrits dans le brevet européen No. 0 334 689 dont la composition est, en % en poids :
Al₂O₃ = 40-75%, ZrO₂ = 20-45%, SiO₂ = 5-20%, Na₂O = 0-2,7%, K₂O = 0,15-4,25% et le total de Fe₂O₃+TiO₂+CaO+MgO = 0-0,3%.

D'une manière générale, il est estimé être à la portée de l'homme du métier de déterminer, parmi les matériaux réfractaires céramiques connus, ceux qui conviendront pour la fabrication des pièces de l'invention.

L'invention concerne aussi une grille métallique de soufflage de régénérateur d'unité de craquage catalytique, caractérisée en ce qu'elle est pourvue d'un revêtement protecteur constitué par une pluralité de pièces protectrices modulaires en céramique selon l'invention, dont les dalles sont disposées les unes à côté des autres avec un faible jeu mutuel, ledit jeu étant jointoyé avec un béton réfractaire.

L'invention concerne enfin un régénérateur d'unité de craquage catalytique caractérisé en ce qu'il comporte une grille de soufflage métallique pourvue d'un revêtement protecteur selon l'invention.

La description qui va suivre, faite en se référant aux dessins, fera bien comprendre la pratique de l'invention.

Sur les dessins :
la figure 1 est une vue schématique en coupe d'une grille de soufflage de régénérateur d'unité de craquage pourvue de pièces protectrices modulaires selon l'invention;
la figure 2 est une vue schématique du dessus de la grille de la figure 1 ;
la figure 3 est une vue par en dessous d'une des pièces protectrices modulaires équipant la grille des figures 1 et 2 ;
la figure 4 est une vue en coupe transversale illustrant le montage et la fixation des pièces protectrices sur la grille des figures 1 et 2, et
les figures 5 et 6 sont des vues, respectivement, en plan et en coupe transversale illustrant l'emploi d'un autre type de pièces protectrices modulaires selon l'invention.

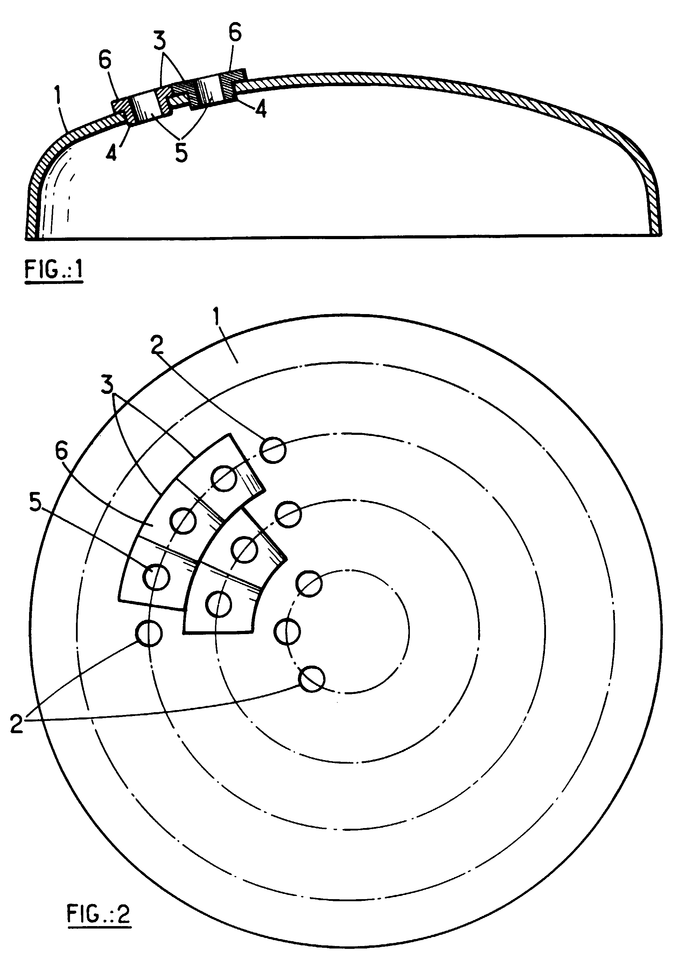

Sur les figures 1 à 4 est représentée une grille 1 de soufflage, de forme courbe, en acier inoxydable, de régénérateur d'unité de craquage. Cette grille comporte une pluralité de perforations ou trous 2 et est protégée par une pluralité de pièces modulaires 3 en céramique réfractaire, dont on n'a représenté que quelques unes d'entre elles pour des raisons de commodité de représentation. Ces pièces modulaires 3 comportent chacune une portion cylindrique 4, pourvue d'un alésage 5, formant busette et une partie 6 formant dalle perpendiculaire à la portion 4 à l'extrémité supérieure de celle-ci. La dalle 6 présente, en élévation, la forme d'un secteur de couronne comme on le voit bien sur la figure 2. La portion cylindrique 4 de chaque pièce 3 est enfilée dans un des trous 2 de la grille et la pièce 3 est fixée à la grille par un moyen de fixation approprié comme décrit ci-après.

La forme et les dimensions des dalles 6 sont telles que les dalles forment une sorte de pavage dans lequel les dalles sont faiblement espacées les unes des autres.

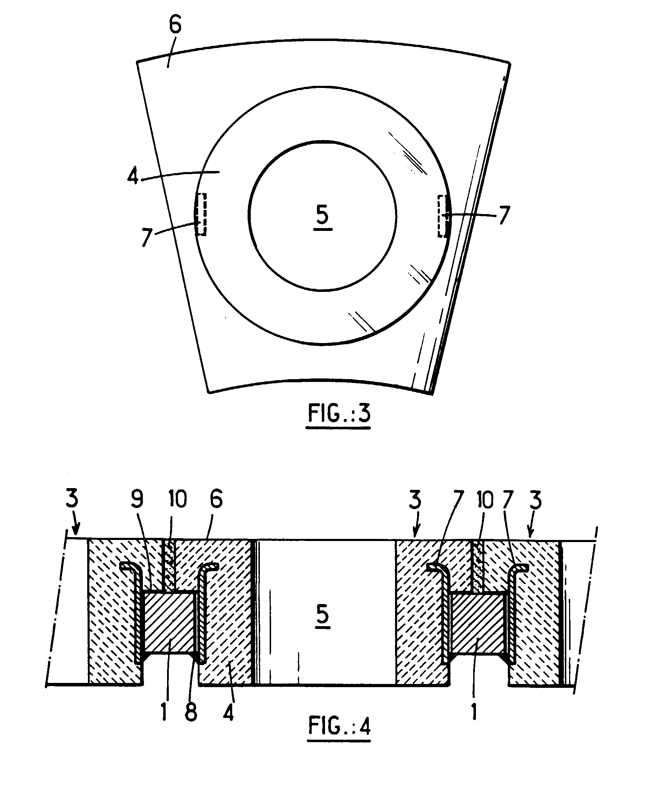

Chaque pièce 3 est munie, à la périphérie de la portion 4 de deux languettes métalliques 7, par exemple en Incoloil 800 HT, diamétralement opposées et dont l'une des extrémités est noyée dans la matière céramique contenant la pièce 3. Ces languettes servent à fixer la pièce 3 à la grille 1, par exemple par des points de soudure 8, comme l'illustre la figure 4. En variante, il serait possible de n'utiliser qu'une seule languette au lieu de deux.

Entre la pièce 3 et la grille 1 est intercalée, au moment de la mise en place, une rondelle 9 formée d'un feutre compressible de fibres céramiques, tel que le produit K50 commercialisé par la Société KERLANE. Le rôle de cette rondelle, que l'on comprime lors du montage (d'environ 2 mm initialement à 1 mm), est d'amortir les vibrations auxquelles sont soumises les pièces en service, et de compenser les irrégularités de surface de la grille.

Le jeu existant entre les dalles est jointoyé à l'aide d'un béton réfractaire 10, tel qu'un béton du type à haute teneur en alumine ou en AZS.

Comme on le voit sur les figures 1 et 4, la longueur des portions 4 des pièces est supérieure à l'épaisseur de la grille 1 de sorte que les portions 4 saillent en-dessous de la grille et exercent un effet protecteur amélioré sur celle-ci.

Grâce au revêtement ou garnissage protecteur de l'invention, il n'y a qu'une très faible surface de béton exposée au contact avec les produits de réaction et le catalyseur. De plus, cette surface exposée est protégée par les dalles céramiques avoisinantes. Ceci limite fortement la vitesse de dégradation de l'ensemble grille-revêtement protecteur. En cas de nécessité de réparation d'une pièce, la pièce endommagée peut être facilement enlevée et remplacée. Il suffit de dessouder cette pièce, de casser le joint béton la reliant aux pièces adjacentes, d'ôter la pièce défectueuse, de mettre en place la nouvelle pièce, de la souder à la grille et de refaire le joint en béton.

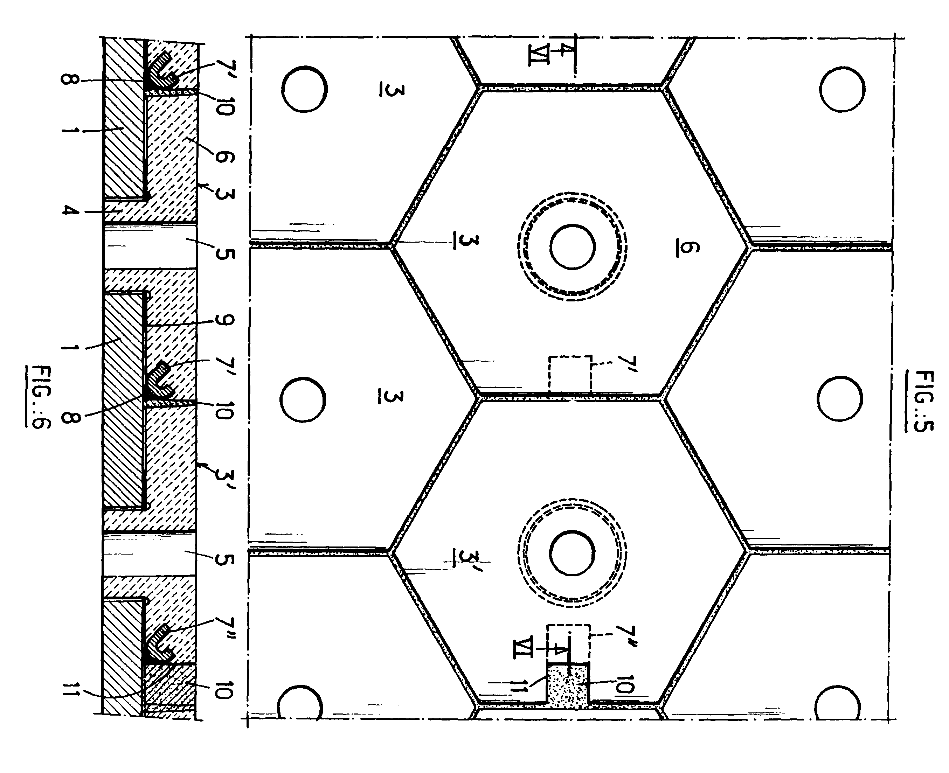

Les figures 5 et 6 illustrent une variante de réalisation.

Dans cette variante la dalle 6 présente une forme hexagonale et le moyen de fixation consiste en une languette métallique coudée 7' noyée dans sa plus grande part dans la périphérie de la dalle 6. Seule la partie coudée de cette languette affleure à la partie inférieure de la dalle pour pouvoir être soudée à la grille au fur et à mesure que les pièces protectrices sont montées sur la grille. Egalement, dans cette variante, la longueur de la portion tubulaire 4 est telle que cette dernière affleure la surface inférieure de la grille.

Bien entendu, si désiré, on pourrait modifier la variante à dalle hexagonale qui vient d'être décrite pour y adapter les moyens de fixation du mode de réalisation des figures 1 à 4 et/ou pour faire en sorte que la portion tubulaire 4 dépasse par rapport à la surface inférieure de la grille.

La variante de réalisation des figures 5 et 6 autorise aussi des réparations faciles. Il suffit de casser la dalle de la pièce usée, de dessouder la languette, et de mettre en place une pièce neuve. Toutefois, compte tenu de la localisation de la languette coudée 7' dans les pièces 3, il ne serait pas possible de souder ces pièces à la grille, faute d'un passage d'accès. Il convient donc d'utiliser, comme pièces de remplacement, des pièces 3' modifiées comportant un évidement 11 prévu dans la dalle et permettant l'accès à la languette 7" qui se trouve alors décalée vers le centre de la dalle, au ras de l'évidement 11, comme l'illustrent les figures 5 et 6. Après soudure de la languette 7", on remplit de béton réfractaire 10 l'évidement 11 et le joint avec les dalles environnantes.

Il va de soi que les modes de réalisation décrits ne sont que des exemples et qu'on pourrait les modifier, notamment par substitution d'équivalents techniques, sans sortir pour cela du cadre de l'invention, telle que définie par les revendications.

## Revendications

1. Pièce protectrice modulaire en céramique pour grille métallique de soufflage de régénérateur d'unité de craquage catalytique, caractérisée en ce qu'elle comporte une portion tubulaire formant busette et une portion formant dalle s'étendant sensiblement perpendiculairement à la portion tubulaire à partir d'une extrémité de celle-ci.

2. Pièce selon la revendication 1, caractérisée en ce que la dalle présente la forme d'un hexagone ou d'un secteur de couronne.

3. Pièce selon la revendication 1 ou 2, caractérisée en ce que la longueur de la portion tubulaire est telle que cette portion tubulaire saille par rapport à la surface inférieure de la grille.

4. Pièce selon l'une quelconque des revendications 1 à 3, caractérisée en ce qu'elle comporte, en outre, un moyen de fixation à la grille de soufflage.

5. Pièce selon la revendication 4, caractérisée en ce que le moyen de fixation consiste en au moins un élément métallique partiellement noyé dans la matière céramique constituant la pièce.

6. Pièce selon la revendication 5, caractérisée en ce que l'insert de fixation est prévu sous la dalle et en périphérie de celle-ci.

7. Pièce selon la revendication 5, caractérisée en ce que l'insert de fixation est prévu dans la partie tubulaire et dépasse en dessous de la grille métallique.

8. Pièce selon l'une des revendications 1 à 7, caractérisée en ce qu'elle est monolithique.

9. Grille métallique de soufflage de régénérateur d'unité de craquage catalytique, caractérisée en ce qu'elle est pourvue d'un revêtement protecteur constitué par une pluralité de pièces protectrices modulaires en céramique telles que définies à l'une quelconque des revendications 1 à 8, dont les dalles sont disposées les unes à côté des autres avec un faible jeu mutuel, ledit jeu étant jointoyé avec un béton réfractaire.

10. Régénérateur d'unité de craquage catalytique caractérisé en ce qu'il comporte une grille de soufflage métallique pourvue d'un revêtement protecteur, telle que définie à la revendication 9.

## Patentansprüche

1. Modulares Schutzelement aus Keramik für ein metallisches Blasgitter eines Regenerators einer katalytischen Crackingeinheit, dadurch gekennzeichnet, daß es einen eine Düse bildenden rohrförmigen Teil und einen eine Platte bildenden Teil aufweist, der sich von einem Ende des rohrförmigen Teils im wesentlichen senkrecht zu diesem erstreckt.

2. Element nach Anspruch 1, dadurch gekennzeichnet, daß die Platte die Form eines Sechsecks oder eines Kranzsektors hat.

3. Element nach Anspruch 1 oder 2, dadurch gekennzeichnet, daß die Länge des rohrförmigen Teils derart ist, daß der rohrförmige Teil in bezug zur Unterseite des Gitters vorspringt.

4. Element nach einem der Ansprüche 1 bis 3, dadurch gekennzeichnet, daß es ferner eine Einrichtung zur Befestigung an dem Blasgitter aufweist.

5. Element nach Anspruch 4, dadurch gekennzeichnet, daß die Befestigungseinrichtung aus wenigstens einem metallischen Teil besteht, das in das das Element bildende Keramikmaterial teilweise eingesenkt ist.

6. Element nach Anspruch 5, dadurch gekennzeichnet, daß der Befestigungseinsatz unter der Platte und am Umfang derselben vorgesehen ist.

7. Element nach Anspruch 5, dadurch gekennzeichnet, daß das Befestigungselement im rohrförmigen Teil vorgesehen ist und sich bis unterhalb des Metallgitters erstreckt.

8. Element nach einem der Ansprüche 1 bis 7, dadurch gekennzeichnet, daß es monolithisch ist.

9. Metallisches Blasgitter eines Regenerators einer katalytischen Crackingeinheit, dadurch gekennzeichnet, daß es mit einer Schutzverkleidung versehen ist, die aus mehreren keramischen modularen Schutzelementen nach einem der Ansprüche 1 bis 8 besteht, wobei die Platten mit geringem gegenseitigem Spiel nebeneinanderliegend angeordnet sind, wobei das Spiel mit einem feuerfesten Beton ausgefugt ist.

10. Regenerator einer katalytischen Crackingeinheit, dadurch gekennzeichnet, daß er ein metallisches Blasgitter mit einer Schutzverkleidung nach Anspruch 9 versehen ist.

## Claims

1. Modular ceramic protective part for a metal blowing grate of a catalytic cracking unit regenerator, characterized in that it includes a tubular portion forming a nozzle, and a paving tile portion extending substantially perpendicular to the tubular portion from one end thereof.

2. Part according to claim 1, characterized in that the paving tile portion has the shape of a hexagon or of a ring sector.

3. Part according to claim 1 or 2, characterized in that the length of the tubular portion is such that this tubular portion protrudes from the lower surface of the grate.

4. Part according to any one of claims 1 to 3, characterized in that it further includes a means for fastening to the blowing grate.

5. Part according to claim 4, characterized in that the fastening means consists of at least one metal element partially embedded in the ceramic material constituting the part.

6. Part according to claim 5, characterized in that the fastening insert is provided under the paving tile portion and at the periphery thereof.

7. Part according to claim 5, characterized in that the fastening insert is provided in the tubular part and protrudes below the metal grate.

8. Part according to one of claims 1 to 7, characterized in that it is monolithic.

9. Metal blowing grate of a catalytic cracking unit regenerator, characterized in that it is provided with a protective covering consisting of a plurality of modular ceramic protective parts as defined in any one of claims 1 to 8, the paving tile portions of which are arranged beside one another with a small mutual clearance, said clearance being pointed with refractory concrete.

10. Catalytic cracking unit regenerator, characterized in that it includes a metal blowing grate provided with a protective covering, as defined in claim 9.
